# EUROPÄISCHE PATENTSCHRIFT

(11) **EP 3 919 215 B1**
(45) Veröffentlichungstag und Bekanntmachung des Hinweises auf die Patenterteilung: **03.07.2024**
(21) Anmeldenummer: 21176248.9
(22) Anmeldetag: 27.05.2021
(51) Int. Cl.: B29C 65/06, B29C 65/08, B29C 65/16, B29C 65/18, B29C 65/38, B29C 65/74, B29C 65/78, B29C 65/00, B23K 20/10, B29L 31/00, B31B 70/84, B65B 61/18

(54) **SCHWEISSVORRICHTUNG SOWIE VERFAHREN ZUM SCHWEISSEN EINES AUSLASSELEMENTS AN EIN VERPACKUNGSMATERIAL**
WELDING DEVICE AND METHOD FOR WELDING AN OUTLET ELEMENT TO A PACKAGING MATERIAL
DISPOSITIF DE SOUDAGE, AINSI QUE PROCÉDÉ DE SOUDAGE D'UN ÉLÉMENT DE SORTIE SUR UNE MATIÈRE D'EMBALLAGE

(30) Priorität: 05.06.2020 DE 102020115036
(43) Veröffentlichungstag der Anmeldung: 08.12.2021
(73) Patentinhaber: Syntegon Technology GmbH, 71332 Waiblingen (DE)
(72) Erfinder: Greif, Tobias, 71332 Waiblingen (DE)
(74) Vertreter: Daub, Thomas

(56) Entgegenhaltungen:
- EP-A2- 1 464 474
- DE-U1- 7 833 456
- US-A- 5 819 504
- US-A- 6 145 275
- US-A1- 2003 196 411
- US-A1- 2006 080 944

## Beschreibung

### Stand der Technik

Es ist bereits eine Schweißvorrichtung zum Schweißen eines Auslasselements an ein Verpackungsmaterial, mit zumindest einem Amboss, der zumindest einen Aufnahmebereich zur Aufnahme des zu verschweißenden Auslasselements umfasst, mit einem Halteelement, an dem der Amboss angeordnet ist und mit zumindest einem Schweißstempel, der zu einem Schweißen des Auslasselements an das Verpackungsmaterial dazu eingerichtet ist, mit dem Amboss zusammenzuwirken, vorgeschlagen worden.

Weiterhin sind Schweißvorrichtungen zum Schweißen eines Auslasselements an ein Verpackungsmaterial gemäß dem Oberbegriff des Anspruchs 1 aus US 5 819 504 A, EP 1 464 474 A2, US 6 145 275 A und US 2006/080944 A1 bekannt.

### Offenbarung der Erfindung

Die Erfindung geht aus von einer Schweißvorrichtung zum Schweißen eines Auslasselements, insbesondere eines Ventils, an ein Verpackungsmaterial, mit zumindest einem Amboss, der zumindest einen Aufnahmebereich zur Aufnahme des zu schweißenden Auslasselements umfasst, mit einem, insbesondere freitragenden, Halteelement, an dem der Amboss angeordnet ist und mit zumindest einem Schweißstempel, insbesondere einer Sonotrode, der zu einem Schweißen des Auslasselements an das Verpackungsmaterial dazu eingerichtet ist, mit dem Amboss zusammenzuwirken.

Es wird vorgeschlagen, dass die Schweißvorrichtung zumindest eine Stützeinheit zum Stützen des Ambosses umfasst, die zumindest ein beweglich gelagertes Stützelement umfasst, das dazu eingerichtet ist, in einem Schweißbetriebszustand des Schweißstempels eine Haltekraft auf den Amboss auszuüben.

Gemäß der Erfinderung weist das Stützelement zumindest eine Bewegungsachse auf, entlang derer und/oder um die das Stützelement relativ zum Amboss, optional auch zum Halteelement, beweglich gelagert ist. Bevorzugt ist die Bewegungsachse zumindest im Wesentlichen senkrecht zu einer Haupterstreckungsachse des Halteelements ausgerichtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt. Bevorzugt ist das Stützelement linear entlang der Bewegungsachse beweglich gelagert. Es ist alternativ auch denkbar, dass das Stützelement beispielsweise exzentrisch um die Bewegungsachse gelagert ist. Die Stützeinheit ist beispielsweise als eine Hydraulikeinheit, eine Pneumatikeinheit, eine Servoantriebseinheit oder dergleichen ausgebildet. Das Stützelement ist beispielsweise als ein Kolben, insbesondere als ein Hydraulikkolben, ein Pneumatikkolben oder dergleichen ausgebildet. Insbesondere umfasst die Stützeinheit zumindest einen Zylinder, insbesondere Hohlzylinder, an und/oder in dem das Stützelement beweglich gelagert ist, insbesondere entlang der und/oder um die Bewegungsachse des Stützelements. Es ist alternativ auch denkbar, dass die Stützeinheit zumindest ein Federelement, beispielsweise eine Blattfeder, eine Spiralfeder oder dergleichen, umfasst, das dazu vorgesehen ist, eine Haltekraft auf den Amboss auszuüben. Das Halteelement ist vorzugsweise zwischen der Stützeinheit und dem Schweißstempel angeordnet. Der Amboss ist insbesondere zwischen dem Halteelement und der Stützeinheit angeordnet.

Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt. Die Stützeinheit, insbesondere das Stützelement der Stützeinheit, ist dazu eingerichtet, mittels einer auf den Amboss ausgeübten Haltekraft den Amboss zumindest während des Schweißvorgangs in der Schweißposition zu halten. Unter einem "freitragenden" Element soll insbesondere ein Element verstanden werden, das nur an einer Seite eingespannt, fixiert, befestigt o. dgl. ist. Vorzugsweise ist das Halteelement zumindest in einem Bereich des Ambosses frei von einer festen Stütze oder einer Verbindungs- oder Lagerstelle. Bevorzugt weist das Halteelement ein freies Ende und ein befestigtes oder eingespanntes Ende auf. Das Halteelement kann beispielsweise als eine Halteschiene, als Haltearm oder dergleichen ausgebildet sein.

In dem Schweißbetriebszustand sind bevorzugt zumindest der Schweißstempel und der Amboss in einer Schweißposition angeordnet. Der Schweißstempel ist vorzugsweise dazu eingerichtet, das Auslasselement an das Verpackungsmaterial zu schweißen, wenn der Schweißstempel und der Amboss in der Schweißposition angeordnet sind. Insbesondere ist der Schweißstempel dazu eingerichtet, das Auslasselement auf einer dem Schweißstempel zugewandten Seite des Verpackungsmaterials oder auf einer dem Schweißstempel abgewandten Seite des Verpackungsmaterials an das Verpackungsmaterial zu schweißen. In dem Schweißbetriebszustand wird das Auslasselement an das Verpackungsmaterial geschweißt. Die Schweißposition ist insbesondere durch eine relative Anordnung, vorzugsweise durch einen relativen Abstand, des Ambosses zu dem Schweißstempel definiert, die ein Schweißen des Auslasselements an das Verpackungsmaterial ermöglicht. Die Schweißvorrichtung ist bevorzugt als eine Ultraschallschweißvorrichtung ausgebildet. Vorzugsweise ist der Schweißstempel als Sonotrode ausgebildet. Es ist jedoch auch denkbar, dass die Schweißvorrichtung als eine Wärmekontaktschweißvorrichtung, insbesondere mit einem Heizstempel, eine Induktionsschweißvorrichtung, eine Impulsschweißvorrichtung, eine Zirkularschweißvorrichtung, eine Laserdurchstrahlschweißvorrichtung oder dergleichen ausgebildet ist.

Das Auslasselement ist vorzugsweise zumindest dazu vorgesehen, ein Fluid zumindest entlang einer Auslassrichtung passieren zu lassen. Das Auslasselement kann beispielsweise als Ventil, insbesondere als Aromaschutzventil, als Auslassöffnung, als Verschluss oder dergleichen ausgebildet sein. Das Verpackungsmaterial ist vorzugsweise zumindest dazu vorgesehen, zu Beutelpackungen oder ähnlichen Verpackungen, insbesondere mittels einer Verpackungsmaschine, verarbeitet zu werden. Die Verpackungsmaschine umfasst besonders bevorzugt zumindest die Schweißvorrichtung. Das Verpackungsmaterial bildet insbesondere eine flache Packstoffbahn. Das Verpackungsmaterial liegt insbesondere vor dem Schweißvorgang durch die Schweißvorrichtung zumindest einfach gefaltet vor. Das Verpackungsmaterial ist vorzugsweise zumindest dazu vorgesehen, zumindest vor dem Schweißvorgang durch die Schweißvorrichtung zumindest teilweise um einen Öffnungswinkel aufgefaltet zu werden. Der Öffnungswinkel ist vorzugsweise zumindest kleiner als 25°, bevorzugt zumindest kleiner als 15° und besonders bevorzugt zumindest kleiner als 10°. Die Schweißvorrichtung umfasst bevorzugt zumindest eine Materialführungsbahn, die zumindest dazu eingerichtet ist, dem Schweißstempel und dem Amboss das Verpackungsmaterial zuzuführen und das Verpackungsmaterial nach dem Schweißvorgang von dem Schweißstempel und dem Amboss abzuführen. Eine Materialführungsachse der Materialführungsbahn verläuft insbesondere zumindest im Wesentlichen senkrecht zu einer Zuführungsrichtung einer Auslasselementzuführungseinheit und/oder senkrecht zu der Bewegungsachse des Stützelements. Das Verpackungsmaterial weist vorzugsweise eine Verpackungsmaterialbewegungsachse auf, entlang derer das Verpackungsmaterial bewegbar ist. Die Verpackungsmaterialbewegungsachse verläuft bevorzugt zumindest im Wesentlichen parallel zu der Materialführungsachse der Materialführungsbahn. Die Materialführungsbahn kann beispielsweise zumindest teilweise von dem Halteelement gebildet sein oder separat zu dem Halteelement ausgebildet sein.

Die Schweißvorrichtung umfasst vorzugsweise zumindest die genannte Auslasselementzuführungseinheit, die zumindest dazu eingerichtet ist, dem Aufnahmebereich des Ambosses zumindest das Auslasselement zuzuführen. Der Aufnahmebereich ist vorzugsweise an einer Ambossoberseite des Ambosses angeordnet. Die Ambossoberseite ist bevorzugt an einer dem Schweißstempel zugewandten Seite des Ambosses an dem Amboss angeordnet. Die Ambossoberseite ist bevorzugt an einer der Stützeinheit abgewandten Seite des Ambosses am Amboss angeordnet. Der Aufnahmebereich ist insbesondere von der Ambossoberseite des Ambosses gebildet. Der mittels der Ambossoberseite gebildete Aufnahmebereich ist besonders bevorzugt passgenau zu dem Auslasselement ausgebildet. Insbesondere ist die Auslasselementzuführungseinheit zumindest in einem Betriebszustand auf einer dem Schweißstempel zugewandten Seite des Verpackungsmaterials oder auf einer dem Schweißstempel abgewandten Seite des Verpackungsmaterials angeordnet. Die Auslasselementzuführungseinheit ist vorzugsweise an dem Halteelement angeordnet. Die Auslasselementzuführungseinheit weist bevorzugt zumindest ein Führungselement auf, wobei das Auslasselement dazu vorgesehen ist, bei einer Zuführung in den Aufnahmebereich des Ambosses entlang des Führungselements geführt zu werden. Vorzugsweise ist das Führungselement dazu vorgesehen, eine Vielzahl von Auslasselementen zu führen. Die Auslasselemente der Vielzahl von Auslasselementen sind insbesondere zueinander lose in einer Reihe hintereinander anordenbar, vorzugsweise auf dem Führungselement anordenbar, oder bilden eine zusammenhängende Bahn von Auslasselementen. Bevorzugt ist das Führungselement als eine Führungsschiene oder dergleichen ausgebildet. Es ist denkbar, dass das Führungselement einstückig mit dem Halteelement ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es ist auch denkbar, dass die Auslasselementzuführungseinheit, insbesondere das Führungselement, separat von dem Halteelement ausgebildet und/oder angeordnet ist. Die Zuführungsrichtung der Auslasselementzuführungseinheit verläuft vorzugsweise zumindest teilweise parallel zu der Haupterstreckungsachse des Halteelements und/oder zumindest teilweise senkrecht zu der Bewegungsachse des Stützelements.

Vorteilhaft kann eine kompakte Schweißvorrichtung bereitgestellt werden. Vorteilhaft kann eine Verwendung eines besonders flachen Ambosses realisiert werden. Vorteilhaft kann eine besonders komplikationsfreie Verarbeitung des Verpackungsmaterials, insbesondere nach dem Schweißvorgang, ermöglicht werden. Vorteilhaft kann der Öffnungswinkel bei einer Auffaltung des Verpackungsmaterials vor einem Schweißvorgang klein gehalten werden. Vorteilhaft kann ein besonders präziser Schweißvorgang ermöglicht werden.

Außerdem wird vorgeschlagen, dass der Amboss beweglich an dem Halteelement gelagert ist und mittels des Stützelements mit einer Haltekraft in Richtung des Schweißstempels beaufschlagbar ist. Der Amboss ist beispielsweise mittels eines linearen Walzkörperlagers, eines linearen Gleitlagers oder dergleichen an dem Halteelement beweglich gelagert. Insbesondere weist der Amboss eine Ambossbewegungsachse auf, entlang derer und/oder um die der Amboss beweglich am Halteelement gelagert ist. Vorzugsweise verläuft die Ambossbewegungsachse zumindest im Wesentlichen senkrecht zu der Haupterstreckungsachse des Halteelements. Bevorzugt verläuft die Ambossbewegungsachse zumindest im Wesentlichen parallel zu der Bewegungsachse des Stützelements der Stützeinheit. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Besonders bevorzugt ist der Amboss linear entlang der Ambossbewegungsachse beweglich gelagert. Vorzugsweise ist die Stützeinheit dazu eingerichtet, mittels des Stützelements den Amboss vor dem Schweißvorgang in die Schweißposition zu bewegen. Es ist denkbar, dass sich die relative Anordnung des Ambosses zu dem Schweißstempel, insbesondere ein Abstand des Ambosses zu dem Schweißstempel, während des Schweißvorgangs ändert, vorzugsweise aufgrund eines Abschmelzens einer Siegelfläche des Auslasselements. Besonders bevorzugt ist die Stützeinheit dazu eingerichtet, mittels des Stützelements den Amboss während des Schweißvorgangs in der Schweißposition zu halten. Besonders bevorzugt ist die Stützeinheit dazu eingerichtet, mittels des Stützelements die relative Anordnung des Ambosses zu dem Schweißstempel dem Abschmelzen der Siegelfläche des Auslasselements anzupassen. Die Ambossoberseite des Ambosses ist vorzugsweise zumindest in dem Schweißbetriebszustand beabstandet zu dem Führungselement der Auslasselementzuführungseinheit angeordnet, insbesondere betrachtet entlang der Ambossbewegungsachse des Ambosses. Vorteilhaft kann damit einer Beschädigung von weiteren auf dem Führungselement angeordneten Auslasselementen durch den Schweißvorgang entgegengewirkt werden. Das Stützelement ist dazu vorgesehen, sich nach einem Schweißvorgang in eine Ausgangsposition relativ zu der Stützeinheit zu bewegen. Vorzugsweise ist der Amboss in der Ausgangsposition des Stützelements frei von einer Kraftbeaufschlagung mittels des Stützelements. Bevorzugt ist der Amboss dazu eingerichtet, nach einem Schweißvorgang, insbesondere wenn sich das Stützelement in der Ausgangsposition befindet und/oder das Stützelement den Amboss nicht mit einer Haltekraft beaufschlagt, in eine Auslasselementzuführungsposition bewegt zu werden. Der Amboss umfasst bevorzugt zumindest eine Bewegungseinheit, die zumindest dazu eingerichtet ist, den Amboss in die Auslasselementzuführungsposition zu bewegen. Die Bewegungseinheit ist bevorzugt pneumatisch ausgebildet. Es ist jedoch alternativ auch denkbar, dass die Bewegungseinheit elektrisch, mechanisch oder dergleichen ausgebildet ist. Beispielsweise ist alternativ denkbar, dass die Bewegungseinheit zumindest ein Federelement oder dergleichen umfasst, das zu einer Rückstellung des Ambosses in die Auslasselementzuführungsposition vorgesehen ist. Das Federelement kann beispielsweise als eine Spiralfeder, als eine Blattfeder oder dergleichen ausgebildet sein. Die Auslasselementzuführungseinheit ist dazu eingerichtet, dem Aufnahmebereich des Ambosses zumindest in der Auslasselementzuführungsposition des Ambosses das Auslasselement zuzuführen. Es kann vorteilhaft ein präziser Schweißvorgang bei gleichzeitig kompakter Bauweise des Ambosses gewährleistet werden.

Ferner wird vorgeschlagen, dass die Stützeinheit zumindest einen Hydraulikzylinder, einen Pneumatikzylinder oder einen Servoantrieb zu einer Bewegung des Stützelements umfasst. Bevorzugt ist der Hydraulikzylinder, der Pneumatikzylinder oder der Servoantrieb dazu eingerichtet, das Stützelement entlang der Bewegungsachse des Stützelements zu bewegen. Besonders bevorzugt ist der Hydraulikzylinder, der Pneumatikzylinder oder der Servoantrieb dazu eingerichtet, das Stützelement derart zu bewegen, dass der Amboss durch ein Zusammenwirken mit dem Stützelement in die Schweißposition bewegt wird. Bevorzugt ist der Hydraulikzylinder, der Pneumatikzylinder oder der Servoantrieb dazu eingerichtet, das Stützelement derart zu bewegen und/oder zu halten, dass der Amboss während des Schweißvorgangs in der Schweißposition haltbar ist. Der Hydraulikzylinder, der Pneumatikzylinder oder der Servoantrieb ist dazu vorgesehen, das Stützelement zumindest nach dem Schweißvorgang in die Ausgangsposition des Stützelements zu bewegen. Es kann vorteilhaft eine besonders komfortable Verarbeitung des Verpackungsmaterials ermöglicht werden. Vorteilhaft kann ein präziser Schweißvorgang ermöglicht werden. Vorteilhaft kann durch eine Bewegung des Ambosses ein Abschmelzen der Siegelfläche des Auslasselements während des Schweißvorgangs berücksichtigt werden, um ein präzises Verschweißen zu ermöglichen.

Des Weiteren wird vorgeschlagen, dass die Stützeinheit derart relativ zum Halteelement angeordnet ist, dass das Verpackungsmaterial zwischen dem Stützelement und dem Halteelement anordenbar ist. Das Stützelement der Stützeinheit ist vorzugsweise derart relativ zum dem Halteelement anordenbar, dass in zumindest einem Zustand ein Spalt zwischen der Stützeinheit und dem Halteelement vorhanden ist. Das Verpackungsmaterial ist bevorzugt in dem Spalt zwischen dem Stützelement und dem Halteelement bewegbar. Bevorzugt sind der Amboss und das Stützelement der Stützeinheit derart relativ zueinander anordenbar, dass der Amboss und das Stützelement zueinander beabstandet sind. Besonders bevorzugt ist zwischen dem Amboss und dem Stützelement das Verpackungsmaterial anordenbar, insbesondere ist das Verpackungsmaterial zumindest bei dem Schweißvorgang zwischen dem Amboss und dem Stützelement angeordnet, besonders bevorzugt zwischen dem Amboss und dem Stützelement eingeklemmt. Der Amboss ist besonders bevorzugt derart relativ zu dem Stützelement anordenbar, dass das Verpackungsmaterial zwischen dem Amboss und dem Stützelement bewegbar ist. Das Verpackungsmaterial ist insbesondere zumindest zwischen dem Amboss und dem Stützelement bewegbar, wenn sich das Stützelement in einer Ausgangsposition befindet. Bevorzugt ist das Verpackungsmaterial dazu vorgesehen, zumindest zwischen zwei aufeinanderfolgenden Schweißvorgängen zwischen dem Amboss und dem Stützelement bewegt zu werden, insbesondere mittels der Materialführungsbahn. Vorzugsweise ist das Verpackungsmaterial bei dem Schweißvorgang zwischen dem Schweißstempel und dem Halteelement und zwischen dem Halteelement und der Stützeinheit angeordnet. Insbesondere befindet sich das Verpackungsmaterial bei dem Schweißvorgang zwischen dem Amboss und dem Schweißstempel sowie zwischen dem Amboss und dem Stützelement. Es kann vorteilhaft eine besonders kompakte Schweißvorrichtung bereitgestellt werden. Vorteilhaft kann eine Verwendung eines besonders flachen Ambosses bei einem gleichzeitig präzisen Schweißvorgang ermöglicht werden. Der Öffnungswinkel des Verpackungsmaterials vor dem Schweißvorgang kann vorteilhaft besonders klein gehalten werden.

Ferner wird vorgeschlagen, dass der Amboss eine Ambossstützfläche aufweist, die zumindest dazu eingerichtet ist, zum Stützen des Ambosses mit dem Stützelement zusammenzuwirken, wobei eine maximale Erstreckung der Ambossstützfläche größer ist als eine maximale Erstreckung des Aufnahmebereichs des Ambosses. Die Ambossstützfläche ist vorzugsweise an einer dem Stützelement der Stützeinheit zugewandten Seite des Ambosses am Amboss angeordnet. Das Verpackungsmaterial liegt insbesondere zumindest in dem Schweißbetriebszustand an der Ambossstützfläche an. Die Ambossstützfläche ist bevorzugt an einer Ambossunterseite des Ambosses angeordnet. Die Ambossunterseite ist insbesondere abgewandt zu der Ambossoberseite des Ambosses angeordnet. Das Stützelement weist insbesondere zumindest eine Stützfläche auf, die zumindest dazu eingerichtet ist, zum Stützen des Ambosses mit der Ambossstützfläche zusammenzuwirken. Insbesondere liegt die Stützfläche der Ambossstützfläche gegenüber. Das Verpackungsmaterial liegt vorzugsweise zumindest im Schweißbetriebszustand an der Stützfläche an. Die Ambossstützfläche verläuft besonders bevorzugt parallel zu der Stützfläche, insbesondere zumindest in dem Schweißbetriebszustand. Bevorzugt entspricht eine maximale Erstreckung der Stützfläche der maximalen Erstreckung der Ambossstützfläche. Es ist jedoch auch denkbar, dass die maximale Erstreckung der Ambossstützfläche kleiner oder größer ist als die maximale Erstreckung der Stützfläche des Stützelements. Es kann vorteilhaft eine Verwendung eines besonders flachen Ambosses realisiert und gleichzeitig einer Beschädigung des Verpackungsmaterials durch Abstützen des Ambosses mittels der Stützeinheit entgegengewirkt werden.

Außerdem wird vorgeschlagen, dass die Schweißvorrichtung zumindest eine Stanzeinheit umfasst, die zumindest dazu vorgesehen ist, eine Perforation in das Verpackungsmaterial einzubringen, wobei die Stanzeinheit zumindest teilweise an dem Schweißstempel angeordnet ist. Bevorzugt ist die Stanzeinheit zumindest teilweise innerhalb des Schweißstempels angeordnet. Vorzugsweise weist der Schweißstempel zumindest eine Ausnehmung auf, in der die Stanzeinheit, insbesondere zumindest ein Stanzwerkzeug der Stanzeinheit, anordenbar ist. Es ist alternativ auch denkbar, dass die Stanzeinheit zumindest teilweise an einer Außenseite des Schweißstempels angeordnet ist. Insbesondere umfasst die Stanzeinheit zumindest das Stanzwerkzeug. Das Stanzwerkzeug ist besonders bevorzugt als Lochstanzwerkzeug ausgebildet. Es ist jedoch auch denkbar, dass das Stanzwerkzeug als ein anderes, dem Fachmann bekanntes, Stanzwerkzeug ausgebildet ist. Das Stanzwerkzeug ist bevorzugt beweglich an dem Schweißstempel gelagert. Eine Stanzwerkzeugbewegungsachse des Stanzwerkzeugs verläuft vorzugsweise parallel zu der Bewegungsachse des Stützelements und/oder zu der Ambossbewegungsachse des Ambosses. Die Stanzeinheit ist insbesondere dazu eingerichtet, mittels des Stanzwerkzeugs die Perforation in das Verpackungsmaterial einzubringen. Zum Einbringen der Perforation in das Verpackungsmaterial ist die Stanzeinheit vorzugsweise dazu eingerichtet, das Stanzwerkzeug relativ zu dem Verpackungsmaterial zu bewegen, insbesondere in eine Richtung des Verpackungsmaterials zu bewegen. Ferner ist denkbar, dass die Stanzeinheit zumindest ein weiteres Stanzwerkzeug umfasst, welches insbesondere an dem Halteelement oder an dem Amboss angeordnet ist. Das weitere Stanzwerkzeug ist insbesondere dazu vorgesehen, die zusammenhängende Bahn von Auslasselementen, bevorzugt in einzelne Auslasselemente, zu teilen. Das weitere Stanzwerkzeug ist bevorzugt an dem Amboss oder an dem Halteelement befestigt. Vorzugsweise ist das weitere Stanzwerkzeug dazu vorgesehen, die zusammenhängende Bahn von Auslasselementen mittels einer Relativbewegung des Ambosses zu dem Halteelement zu durchtrennen. Insbesondere bildet eine Kante des Ambosses bzw. des Halteelements eine Stanzkante für das weitere Stanzwerkzeug. Insbesondere ist denkbar, dass in zumindest einem Ausführungsbeispiel, bei dem das weitere Stanzwerkzeug an dem Amboss angeordnet ist, eine Stanzwerkzeugbewegungsachse des weiteren Stanzwerkzeugs bevorzugt zumindest im Wesentlichen parallel zu der Stanzwerkzeugbewegungsachse des Stanzwerkzeugs und/oder zu der Ambossbewegungsachse verläuft. Das weitere Stanzwerkzeug ist vorzugsweise als Stanzmesser oder Stanzkante ausgebildet. Es ist jedoch denkbar, dass das weitere Stanzwerkzeug als ein anderes, dem Fachmann bekanntes Stanzwerkzeug ausgebildet ist. Vorteilhaft kann eine kompakte Schweißvorrichtung bereitgestellt werden, die eine hohe Funktionalität aufweist. Es kann vorteilhaft eine Schweißvorrichtung mit einer Stanzeinheit ausgestattet werden, ohne den Platzbedarf der Schweißvorrichtung wesentlich zu vergrößern.

Des Weiteren wird ein Verfahren zum Schweißen eines, insbesondere des zuvor bereits genannten, Auslasselements an ein, insbesondere das zuvor bereits genannte, Verpackungsmaterial mittels einer erfindungsgemäßen Schweißvorrichtung vorgeschlagen. Vorzugsweise wird das zumindest einfach gefaltete Verpackungsmaterial vor dem Schweißvorgang um den Öffnungswinkel aufgefaltet. In zumindest einem Verfahrensschritt wird das, insbesondere um den Öffnungswinkel aufgefaltete, Verpackungsmaterial in die Schweißvorrichtung geführt und/oder in der Schweißvorrichtung geführt. Vorzugsweise wird in zumindest einem Verfahrensschritt das Auslasselement in dem Aufnahmebereich des Ambosses angeordnet. Vorzugsweise wird das Auslasselement entlang des Führungselements in der Zuführungsrichtung bewegt, bis sich das Auslasselement in dem Aufnahmebereich des Ambosses befindet. Insbesondere wird das Auslasselement in zumindest einem Verfahrensschritt an das Verpackungsmaterial geschweißt. Vorzugsweise wird das Auslasselement in einem Ultraschallschweißverfahren an das Verpackungsmaterial geschweißt. Es alternativ auch denkbar, dass das Auslasselement in einem Wärmekontaktschweißverfahren, insbesondere mit einem Heizstempel, einem Induktionsschweißverfahren, einem Impulsschweißverfahren, einem Zirkularschweißverfahren, einem Laserdurchstrahlschweißverfahren oder dergleichen an das Verpackungsmaterial geschweißt wird. Bevorzugt wird das Verpackungsmaterial nach dem Schweißvorgang zumindest einfach gefaltet. Vorteilhaft kann eine besonders komplikationsarme Verarbeitung des Verpackungsmaterials gewährleistet werden. Vorteilhaft kann ein präziser Schweißvorgang bei gleichzeitig einfacher Verpackungsmaterialführung ermöglicht werden. Es kann vorteilhaft eine mittels der Stützeinheit erzeugte Bewegung des Ambosses zu einer Stanzung des Verpackungsmaterials und/oder der zusammenhängenden Bahn von Auslasselementen genutzt werden. Es kann vorteilhaft kompakt und konstruktiv einfach eine Stanzeinheit in die Schweißvorrichtung integriert werden.

Gemäß der Erfindung wird in zumindest einem Verfahrensschritt das Verpackungsmaterial zwischen dem Amboss der Schweißvorrichtung und der Stützeinheit der Schweißvorrichtung angeordnet wird. Vorzugsweise wird das Verpackungsmaterial zwischen dem Amboss und der Stützeinheit, insbesondere dem Stützelement der Stützeinheit, vor und/oder nach dem Schweißvorgang bewegt. Bevorzugt wird das Verpackungsmaterial in zumindest einem Verfahrensschritt zwischen dem Amboss und dem Schweißstempel angeordnet. Besonders bevorzugt wird das Verpackungsmaterial zwischen dem Amboss und dem Schweißstempel vor und/oder nach dem Schweißvorgang bewegt. Die Verpackungsmaterialbewegungsachse verläuft insbesondere zumindest im Wesentlichen senkrecht zu der Bewegungsachse des Stützelements, zu der Ambossbewegungsachse, zu der Zuführungsrichtung der Auslasselementzuführungseinheit und/oder zu der Stanzwerkzeugbewegungsachse. Vorteilhaft kann der Öffnungswinkel bei der Auffaltung des Verpackungsmaterials besonders klein gehalten werden. Vorteilhaft kann ein präziser Schweißvorgang bei gleichzeitig kompakter Schweißvorrichtung erreicht werden.

Ferner wird vorgeschlagen, dass in zumindest einem Verfahrensschritt der Amboss und das Stützelement der Stützeinheit relativ zueinander bewegt werden. Vorzugsweise wird das Stützelement in zumindest einem Verfahrensschritt entlang der Bewegungsachse des Stützelements bewegt. Insbesondere wird das Stützelement in eine Richtung des Ambosses bewegt, zumindest um eine Wirkverbindung des Stützelements mit dem Amboss herzustellen. Vorzugsweise wird das Stützelement, insbesondere nach einem Schweißvorgang in eine dem Amboss entgegengesetzte Richtung entlang der Bewegungsachse des Stützelements bewegt, um einen Abstand zwischen dem Amboss und dem Stützelement herzustellen, besonders bevorzugt um eine Bewegung des Verpackungsmaterials zwischen dem Amboss und dem Stützelement zu ermöglichen. Vorzugsweise wird der Amboss, insbesondere bei bestehender Wirkverbindung zwischen dem Amboss und dem Stützelement, mittels der Stützeinheit, bevorzugt mittels des Stützelements der Stützeinheit, vor dem Schweißvorgang in die Schweißposition bewegt. Es kann vorteilhaft eine Abstützung des Ambosses durch das Stützelement zur Realisierung eines präzisen Schweißens des Auslasselements an das Verpackungsmaterial erreicht werden.

Weiter wird vorgeschlagen, dass in zumindest einem Verfahrensschritt das Auslasselement an das Verpackungsmaterial geschweißt wird, wobei der Amboss mittels des Stützelements abgestützt wird und das Verpackungsmaterial zwischen dem Stützelement und dem Amboss angeordnet ist. Vorzugsweise wird zumindest während des Schweißvorgangs der Amboss mittels des Stützelements abgestützt. Vorzugsweise wird zumindest während des Schweißvorgangs das Verpackungsmaterial zwischen dem Amboss und dem Stützelement eingeklemmt, insbesondere zwischen der Stützfläche des Stützelements und der Ambossstützfläche des Ambosses. Vorteilhaft kann das Auslasselement mit einem besonders flachen Amboss präzise an das Verpackungsmaterial geschweißt werden.

Außerdem wird vorgeschlagen, insbesondere in zumindest einem Ausführungsbeispiel, dass in zumindest einem Verfahrensschritt eine, insbesondere die zuvor bereits genannte, zusammenhängende Bahn von Auslasselementen durch ein Zusammenwirken des Stützelements mit dem Amboss durchtrennt wird. Vorzugsweise wird die zusammenhängende Bahn von Auslasselementen durch eine Relativbewegung des Ambosses zu dem Halteelement durchtrennt. Besonders bevorzugt wird die zusammenhängende Bahn von Auslasselementen derart durchtrennt, dass zumindest ein einzelnes Auslasselement separat zu der zusammenhängenden Bahn von Auslasselementen vorliegt, wobei das einzelne Auslasselement insbesondere in dem Aufnahmebereich des Ambosses angeordnet ist. In zumindest einem Ausführungsbeispiel, in dem das Stanzwerkzeug an dem Halteelement angeordnet ist, wird vorzugsweise durch die Bewegung des Ambosses relativ zu dem weiteren Stanzwerkzeug die zusammenhängende Bahn von Auslasselementen an zumindest einer Stelle durchtrennt. Es ist in zumindest einem alternativen Ausführungsbeispiel, bei dem das weitere Stanzwerkzeug an dem Amboss befestigt ist, auch denkbar, dass durch die Bewegung des weiteren Stanzwerkzeugs relativ zu dem Halteelement und/oder zu der zusammenhängenden Bahn von Auslasselementen, die zusammenhängende Bahn von Auslasselementen an zumindest einer Stelle durchtrennt wird. Vorzugsweise wird die zusammenhängende Bahn von Auslasselementen mittels der Auslasselementzuführungseinheit bewegt. Besonders bevorzugt wird die zusammenhängende Bahn von Auslasselementen entlang des Führungselements der Auslasselementzuführungseinheit bewegt. Es kann vorteilhaft eine Relativbewegung des Ambosses zu dem Halteelement zur Betätigung einer Stanzeinheit genutzt werden. Es kann vorteilhaft einfach eine Durchtrennung der zusammenhängenden Bahn von Auslasselementen ermöglicht werden.

Des Weiteren wird vorgeschlagen, dass in zumindest einem Verfahrensschritt eine Perforation in das Verpackungsmaterial eingebracht wird. Vorzugsweise wird in zumindest einem Verfahrensschritt das Stanzwerkzeug der Stanzeinheit relativ zu dem Schweißstempel bewegt. Insbesondere wird das Stanzwerkzeug in zumindest einem Verfahrensschritt in eine Richtung des Ambosses und/oder des Verpackungsmaterials bewegt, um die Perforation in das Verpackungsmaterial einzubringen. Vorzugsweise wird die Perforation in das Verpackungsmaterial in einem durch das Stützelement ungestützten Zustand des Ambosses eingebracht. Es ist jedoch auch denkbar, dass die Perforation in einem durch das Stützelement gestützten Zustand des Ambosses in das Verpackungsmaterial eingebracht wird. Es kann vorteilhaft eine Perforation mittels einer Schweißvorrichtung in ein Verpackungsmaterial eingebracht werden, ohne deren Platzbedarf wesentlich zu erhöhen. Vorteilhaft können zu einer Perforation eines Verpackungsmaterials zumindest teilweise bereits vorhandene Bauteile der Schweißvorrichtung genutzt werden.

Ferner wird vorgeschlagen, dass der Amboss in zumindest einem Verfahrensschritt in eine, insbesondere die zuvor bereits genannte, Auslasselementzuführungsposition bewegt wird. Bevorzugt wird der Amboss nach dem Schweißvorgang in die Auslasselementzuführungsposition bewegt, insbesondere mittels der Bewegungseinheit. Besonders bevorzugt wird der Amboss automatisch in die Auslasselementzuführungsposition bewegt, solange das Stützelement beabstandet zu dem Amboss angeordnet ist. Vorzugsweise ist die mittels des Stützelements auf den Amboss erzeugte Haltekraft in eine Richtung gerichtet, die entgegensetzt ist zu einer Richtung einer mittels der Bewegungseinheit erzeugten Rückstellkraft. Es kann vorteilhaft konstruktiv einfach ein komplikationsarmer und komfortabler Schweißvorgang gewährleistet werden.

Weiterhin wird eine Verpackungsmaschine zum Herstellen von Verpackungen mit einem, insbesondere dem zuvor bereits genannten, Auslasselement mit einer erfindungsgemäßen Schweißvorrichtung vorgeschlagen. Die Verpackungsmaschine umfasst zumindest eine Verpackungsmaterialführungseinheit, die zumindest dazu vorgesehen ist, der Schweißvorrichtung Verpackungsmaterial vor dem Schweißvorgang zuzuführen. Die Verpackungsmaterialführungseinheit ist zumindest dazu eingerichtet, das Verpackungsmaterial nach dem Schweißen des Auslasselements an das Verpackungsmaterial von der Schweißvorrichtung abzuführen. Die Verpackungsmaschine weist vorzugsweise zumindest eine Faltstation auf, an der das Verpackungsmaterial zumindest einfach gefaltet wird. Die Verpackungsmaterialführungseinheit ist insbesondere zumindest dazu eingerichtet, das Verpackungsmaterial vor dem Einbringen in die Schweißvorrichtung zumindest um den Öffnungswinkel aufzufalten. Es kann vorteilhaft eine besonders komplikationsarme Verpackungsmaschine bereitgestellt werden.

Die erfindungsgemäße Schweißvorrichtung, das erfindungsgemäße Verfahren und/oder die erfindungsgemäße Verpackungsmaschine sollen/soll hierbei nicht auf die oben beschriebene Anwendung und Ausführungsform beschränkt sein. Insbesondere kann die erfindungsgemäße Schweißvorrichtung, das erfindungsgemäße Verfahren und/oder die erfindungsgemäße Verpackungsmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl im Rahmen der Ansprüche aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen im Rahmen der Ansprüche zusammenfassen.

Es zeigen:
- Fig. 1: eine erfindungsgemäße Verpackungsmaschine mit einer erfindungsgemäßen Schweißvorrichtung in einer schematischen Darstellung,
- Fig. 2: die erfindungsgemäße Schweißvorrichtung in einer seitlichen Darstellung,
- Fig. 3: einen schematischen Ablauf eines erfindungsgemäßen Verfahrens zum Schweißen eines Auslasselements an ein Verpackungsmaterial,
- Fig. 4: eine erfindungsgemäße Schweißvorrichtung in einer alternativen Ausführung und
- Fig. 5: einen schematischen Ablauf eines erfindungsgemäßen Verfahrens mit der erfindungsgemäßen Schweißvorrichtung in der alternativen Ausführung.

### Beschreibung der Ausführungsbeispiele

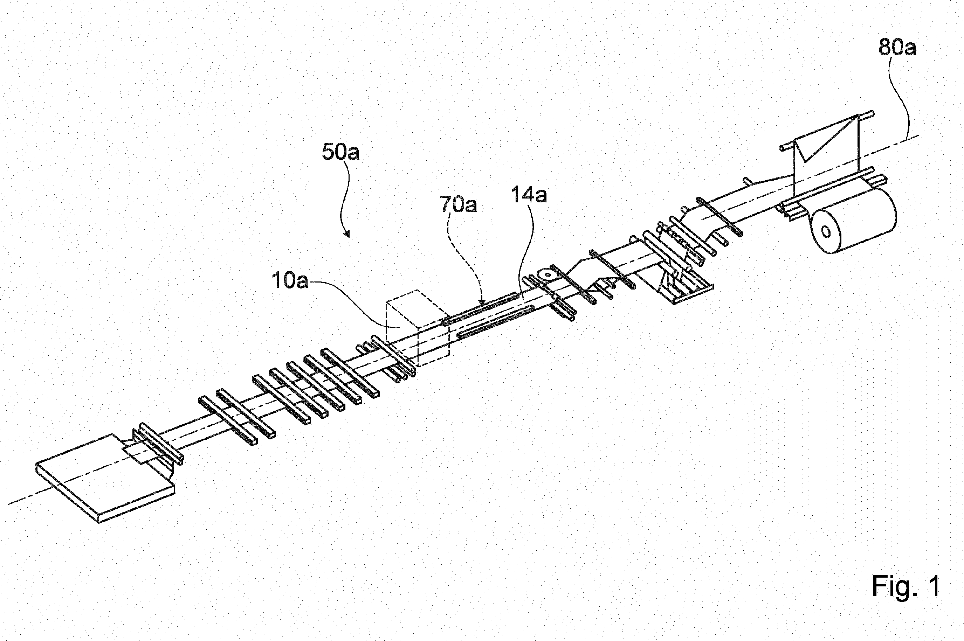

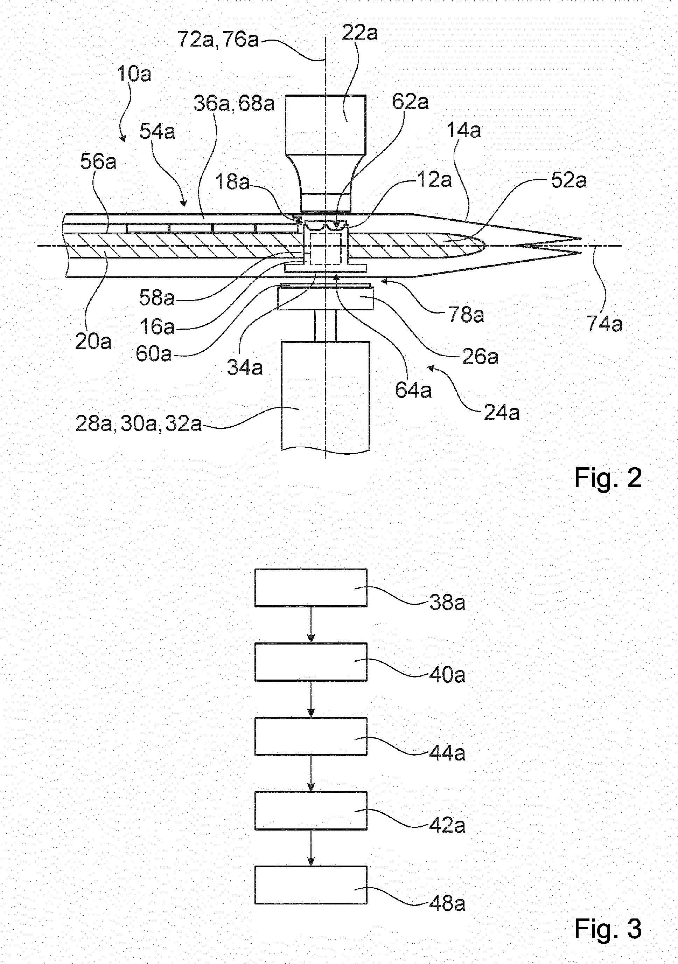

In der Figur 1 ist eine Verpackungsmaschine 50a zum Herstellen von Verpackungen aus einem Verpackungsmaterial 14a mit einem Auslasselement 12a (vgl. Figur 2) gezeigt. Die Verpackungsmaschine 50a ist beispielsweise als eine Fertigbeutelanlage ausgebildet. Die Verpackungsmaschine 50a umfasst zumindest eine Schweißvorrichtung 10a. Das Verpackungsmaterial 14a bildet eine flache Packstoffbahn. Das Verpackungsmaterial 14a ist vor einem Schweißvorgang, in dem das Auslasselement 12a an das Verpackungsmaterial 14a mittels der Schweißvorrichtung 10a geschweißt wird, zumindest einfach gefaltet. Das Verpackungsmaterial 14a ist zumindest dazu vorgesehen, zumindest vor dem Schweißvorgang zumindest teilweise um einen Öffnungswinkel aufgefaltet zu werden. Die Schweißvorrichtung 10a umfasst zumindest eine Materialführungsbahn 70a, die dazu eingerichtet ist, einem Schweißstempel 22a der Schweißvorrichtung 10a und einem Amboss 16a das Verpackungsmaterial 14a zuzuführen und das Verpackungsmaterial 14a nach einem Schweißvorgang von dem Schweißstempel 22a und dem Amboss 16a abzuführen (vgl. Figur 2). Eine Materialführungsachse 80a der Materialführungsbahn 70a verläuft zumindest im Wesentlichen senkrecht zu einer Zuführungsrichtung einer Auslasselementzuführungseinheit 54a der Schweißvorrichtung 10a und/oder senkrecht zu einer Bewegungsachse 72a eines beweglich gelagerten Stützelements 26a einer Stützeinheit 24a der Schweißvorrichtung 10a (vgl. Figur 2). Die Materialführungsbahn 70a ist zumindest teilweise von einem Halteelement 20a der Schweißvorrichtung 10a gebildet oder separat zu dem Halteelement 20a ausgebildet (vgl. Figur 2).

Figur 2 zeigt die Schweißvorrichtung 10a zum Schweißen des Auslasselements 12a an das Verpackungsmaterial 14a. Die Schweißvorrichtung 10a umfasst den Amboss 16a. Der Amboss 16a weist einen Aufnahmebereich 18a zur Aufnahme des zu schweißenden Auslasselements 12a auf. Weiter umfasst die Schweißvorrichtung 10a das Halteelement 20a, an dem der Amboss 16a angeordnet ist, und zumindest den Schweißstempel 22a, der zu einem Schweißen des Auslasselements 12a an das Verpackungsmaterial 14a dazu eingerichtet ist, mit dem Amboss 16a zusammenzuwirken. Der Schweißstempel 22a ist dazu eingerichtet, das Auslasselement 12a auf einer dem Schweißstempel 22a abgewandten Seite des Verpackungsmaterials 14a an das Verpackungsmaterial 14a zu schweißen. Es ist jedoch alternativ auch denkbar, dass der Schweißstempel 22a dazu eingerichtet ist, das Auslasselement 12a auf einer dem Schweißstempel 22a zugewandten Seite des Verpackungsmaterials 14a an das Verpackungsmaterial 14a zu schweißen. Das Halteelement 20a ist zwischen dem Schweißstempel 20a und der Stützeinheit 24a angeordnet. Die Schweißvorrichtung 10a umfasst die Stützeinheit 24a zum Stützen des Ambosses 16a, wobei die Stützeinheit 24a das beweglich gelagerte Stützelement 26a umfasst. Das Stützelement 26a ist dazu eingerichtet, in einem Schweißbetriebszustand des Schweißstempels 22a eine Haltekraft auf den Amboss 16a auszuüben. Die Stützeinheit 24a ist beispielsweise als eine Hydraulikeinheit, eine Pneumatikeinheit, eine Servoantriebseinheit oder dergleichen ausgebildet. Die Stützeinheit 24a umfasst zumindest einen Hydraulikzylinder 28a, einen Pneumatikzylinder 30a oder einen Servoantrieb 32a zu einer Bewegung des Stützelements 26a. Der Hydraulikzylinder 28a, der Pneumatikzylinder 30a oder der Servoantrieb 32a ist dazu vorgesehen, das Stützelement 26a der Stützeinheit 24a relativ zu dem Halteelement 20a und/oder zu dem Amboss 16a zu bewegen. Der Hydraulikzylinder 28a, der Pneumatikzylinder 30a oder der Servoantrieb 32a ist dazu eingerichtet, das Stützelement 26a entlang der Bewegungsachse 72a des Stützelements 26a zu bewegen.

Das Stützelement 26a ist entlang der und/oder um die Bewegungsachse 72a beweglich gelagert relativ zum Amboss 16a und optional auch zum Halteelement 20a. Die Bewegungsachse 72a des Stützelements 26a ist zumindest im Wesentlichen senkrecht zu einer Haupterstreckungsachse 74a des Halteelements 20a ausgerichtet. Das Stützelement 26a ist linear entlang der Bewegungsachse 72a beweglich gelagert. Das Stützelement 26a ist als ein Kolben, insbesondere als ein Hydraulikkolben, ein Pneumatikkolben oder dergleichen ausgebildet. Das Halteelement 20a ist freitragend ausgebildet, wobei das Halteelement 20a zumindest in einem Bereich des Ambosses 16a frei von einer festen Stütze oder einer Verbindungs- oder Lagerstelle ausgebildet ist. Das Haltelement 20a weist zumindest ein freies Ende 52a auf. Das Verpackungsmaterial 14a umschließt das freie Ende 52a des Halteelements 20a, zumindest betrachtet entlang der Haupterstreckungsachse 74a des Halteelements 20a. Die Schweißvorrichtung 10a ist als eine Ultraschallschweißvorrichtung ausgebildet. Der Schweißstempel 22a ist als Sonotrode ausgebildet. Es ist alternativ denkbar, dass die Schweißvorrichtung 10a als eine Wärmekontaktschweißvorrichtung, insbesondere mit einem Heizstempel, eine Induktionsschweißvorrichtung, eine Impulsschweißvorrichtung, eine Zirkularschweißvorrichtung, eine Laserdurchstrahlschweißvorrichtung oder dergleichen ausgebildet ist. Das Auslasselement 12a ist als Ventil, insbesondere als Aromaschutzventil, ausgebildet. Es ist auch denkbar, dass das Auslasselement 12a als Auslassöffnung, als Verschluss oder dergleichen ausgebildet ist.

Die Schweißvorrichtung 10a umfasst zumindest die Auslasselementzuführungseinheit 54a, die zumindest dazu eingerichtet ist, dem Aufnahmebereich 18a des Ambosses 16a das Auslasselement 12a zuzuführen. Der Aufnahmebereich 18a ist an einer Ambossoberseite 62a des Ambosses 16a angeordnet. Die Ambossoberseite 62a ist an einer dem Schweißstempel 22a zugewandten Seite des Ambosses 16a am Amboss 16a angeordnet. Die Ambossoberseite 62a ist an einer der Stützeinheit 24a abgewandten Seite des Ambosses 16a am Amboss 16a angeordnet. Der Aufnahmebereich 18a ist von der Ambossoberseite 62a des Ambosses 16a gebildet. Der mittels der Ambossoberseite 62a gebildete Aufnahmebereich 18a ist passgenau zu dem Auslasselement 12a ausgebildet. Die Auslasselementzuführungseinheit 54a ist zumindest in einem Betriebszustand auf einer dem Schweißstempel 22a abgewandten Seite des Verpackungsmaterials 14a angeordnet. Es ist jedoch alternativ auch denkbar, dass die Auslasselementzuführungseinheit 54a zumindest in einem Betriebszustand auf einer dem Schweißstempel 22a zugewandten Seite des Verpackungsmaterials 14a angeordnet ist. Die Auslasselementzuführungseinheit 54a ist an dem Halteelement 20a angeordnet. Die Auslasselementzuführungseinheit 54a weist zumindest ein Führungselement 56a auf, wobei das Auslasselement 12a dazu vorgesehen ist, bei einer Zuführung in den Aufnahmebereich 18a des Ambosses 16a entlang des Führungselements 56a geführt zu werden. Das Führungselement 56a ist dazu vorgesehen, eine Vielzahl von Auslasselementen 12a zu führen. Die Auslasselemente 12a der Vielzahl von Auslasselementen 12a bilden eine zusammenhängende Bahn von Auslasselementen 12a. Das Führungselement 56a ist als eine Führungsschiene ausgebildet. Das Führungselement 56a ist einstückig mit dem Halteelement 20a ausgebildet ist. Es ist alternativ denkbar, dass die Auslasselementzuführungseinheit 54a, insbesondere das Führungselement 56a, separat von dem Halteelement 20a ausgebildet und/oder angeordnet ist. Die Zuführungsrichtung der Auslasselementzuführungseinheit 54a verläuft zumindest teilweise parallel zu der Haupterstreckungsachse des Halteelements 20a und zumindest teilweise senkrecht zu der Bewegungsachse 72a des Stützelements 26a. Die Zuführungsrichtung der Auslasselementzuführungseinheit 54a ist zumindest in eine Richtung des freien Endes 52a des Halteelements 20a gerichtet.

Der Amboss 16a ist beweglich an dem Halteelement 20a gelagert und mittels des Stützelements 26a mit einer Haltekraft in Richtung des Schweißstempels 22a beaufschlagbar. Der Amboss 16a ist zwischen der Stützeinheit 24a und dem Schweißstempel 22a angeordnet. Der Amboss 16a ist beispielsweise mittels eines linearen Walzkörperlagers, eines linearen Gleitlagers oder dergleichen an dem Halteelement 20a gelagert. Der Amboss 16a weist eine Ambossbewegungsachse 76a auf, entlang derer und/oder um die der Amboss16a beweglich am Halteelement 20a gelagert ist. Die Ambossbewegungsachse 76a verläuft zumindest im Wesentlichen senkrecht zu der Haupterstreckungsachse 74a des Halteelements 20a. Die Ambossbewegungsachse 76a verläuft zumindest im Wesentlichen parallel zu der Bewegungsachse 72a des Stützelements 26a der Stützeinheit 24a. Der Amboss 16a ist linear entlang der Ambossbewegungsachse 76a beweglich gelagert. Die Stützeinheit 24a ist dazu eingerichtet, mittels des Stützelements 26a den Amboss 16a vor dem Schweißvorgang in die Schweißposition zu bewegen. Es ist denkbar, dass sich die relative Anordnung des Ambosses 16a zu dem Schweißstempel 22a, insbesondere ein Abstand des Ambosses 16a zu dem Schweißstempel 22a, während des Schweißvorgangs ändert, vorzugsweise aufgrund eines Abschmelzens einer Siegelfläche des Auslasselements 12a. Die Stützeinheit 24a ist dazu eingerichtet, mittels des Stützelements 26a den Amboss 16a während des Schweißvorgangs in der Schweißposition zu halten. Die Stützeinheit 24a ist dazu eingerichtet, mittels des Stützelements 26a die relative Anordnung des Ambosses 16a zu dem Schweißstempel 22a dem Abschmelzen der Siegelfläche des Auslasselements 12a anzupassen. Die Ambossoberseite 62a des Ambosses 16a ist zumindest in dem Schweißbetriebszustand beabstandet zu dem Führungselement 56a der Auslasselementzuführungseinheit 54a angeordnet, zumindest betrachtet entlang der Ambossbewegungsachse 76a des Ambosses 16a. Das Stützelement 26a ist dazu eingerichtet, sich nach einem Schweißvorgang in eine Ausgangsposition relativ zu der Stützeinheit 24a zu bewegen. Der Amboss 16a ist in der Ausgangsposition des Stützelements 26a frei von einer Kraftbeaufschlagung mittels des Stützelements 26a.

Der Amboss 16a ist dazu eingerichtet, nach einem Schweißvorgang, insbesondere wenn sich das Stützelement 26a in der Ausgangsposition befindet und/oder das Stützelement 26a den Amboss 16a nicht mit einer Haltekraft beaufschlagt, in eine Auslasselementzuführungsposition bewegt zu werden. Der Amboss 16a umfasst zumindest eine Bewegungseinheit 58a, die zumindest dazu eingerichtet ist, den Amboss 16a in die Auslasselementzuführungsposition zu bewegen. Die Bewegungseinheit 58a ist pneumatisch ausgebildet. Es ist jedoch alternativ auch denkbar, dass die Bewegungseinheit mechanisch, hydraulisch oder dergleichen ausgebildet ist. Es ist beispielsweise alternativ denkbar, dass die Bewegungseinheit 58a zumindest ein Federelement oder dergleichen umfasst, das zu einer Rückstellung des Ambosses 16a in die Auslasselementzuführungsposition vorgesehen ist, wobei das Federelement beispielsweise als eine Spiralfeder, als eine Blattfeder oder dergleichen ausgebildet ist. Die Auslasselementzuführungseinheit 54a ist dazu eingerichtet, dem Aufnahmebereich 18a des Ambosses 16a zumindest in der Auslasselementzuführungsposition des Ambosses 16a das Auslasselement 12a zuzuführen.

Die Stützeinheit 24a ist derart relativ zum Halteelement 20a angeordnet, dass das Verpackungsmaterial 14a zwischen dem Stützelement 26a und dem Halteelement 20a anordenbar ist. Das Stützelement 26a der Stützeinheit 24a ist derart relativ zum dem Halteelement 20a anordenbar, dass das Verpackungsmaterial 14a zwischen dem Stützelement 26a und dem Halteelement 20a bewegbar ist. Zwischen dem Halteelement 20a und dem Stützelement 26a ist ein Spalt 78a gebildet, wobei das Verpackungsmaterial 14a in dem Spalt 78a anordenbar und/oder bewegbar ist. Der Amboss 16a und das Stützelement 26a der Stützeinheit 24a sind derart relativ zueinander anordenbar, dass der Amboss 16a und das Stützelement 26a zueinander beabstandet sind. Zwischen dem Amboss 16a und dem Stützelement 26a ist das Verpackungsmaterial 14a anordenbar. Das Verpackungsmaterial 14a ist zumindest bei dem Schweißvorgang zwischen dem Amboss 16a und dem Stützelement 26a angeordnet. Der Amboss 16a ist derart relativ zu dem Stützelement 26a anordenbar, dass das Verpackungsmaterial 14a zwischen dem Amboss 16a und dem Stützelement 26a bewegbar ist. Das Verpackungsmaterial 14a ist zumindest zwischen dem Amboss 16a und dem Stützelement 26a bewegbar, wenn sich das Stützelement 26a in einer Ausgangsposition befindet. In dem in Figur 2 gezeigten Zustand der Stützeinheit 24a ist das Verpackungsmaterial 14a zwischen dem Amboss 16a und dem Stützelement 26a bewegbar. Das Verpackungsmaterial 14a ist dazu vorgesehen, zumindest zwischen zwei aufeinanderfolgenden Schweißvorgängen zwischen dem Amboss 16a und dem Stützelement 26a bewegt zu werden. Das Verpackungsmaterial 14a ist bei dem Schweißvorgang zwischen dem Schweißstempel 22a und dem Halteelement 20a und zwischen dem Halteelement 20a und der Stützeinheit 24a angeordnet. Das Verpackungsmaterial 14a ist bei dem Schweißvorgang zwischen dem Amboss 16a und dem Schweißstempel 22a und zwischen dem Amboss 16a und dem Stützelement 26a angeordnet.

Der Amboss 16a weist zumindest eine Ambossstützfläche 34a auf, die zumindest dazu eingerichtet ist, zum Stützen des Ambosses 16a mit dem Stützelement 26a zusammenzuwirken. Eine maximale Erstreckung der Ambossstützfläche 34a ist größer als eine maximale Erstreckung des Aufnahmebereichs 18a des Ambosses 16a. Die Ambossstützfläche 34a ist an einer dem Stützelement 26a der Stützeinheit 24a zugewandten Seite des Ambosses 16a am Amboss 16a angeordnet. Das Verpackungsmaterial 14a liegt zumindest in dem Schweißbetriebszustand an der Ambossstützfläche 34a an. Die Ambossstützfläche 34a ist an einer Ambossunterseite 64a des Ambosses 16a angeordnet. Die Ambossunterseite 64a des Ambosses 16a ist abgewandt zu der Ambossoberseite 62a des Ambosses 16a angeordnet. Das Stützelement 26a weist zumindest eine Stützfläche 60a auf, die zumindest dazu eingerichtet ist, zum Stützen des Ambosses 16a mit der Ambossstützfläche 34a zusammenzuwirken. Die Stützfläche 60a liegt der Ambossstützfläche 34a gegenüber. Das Verpackungsmaterial 14a liegt zumindest im Schweißbetriebszustand an der Stützfläche 60a an. Die Ambossstützfläche 34a verläuft parallel zu der Stützfläche 60a, zumindest in dem Schweißbetriebszustand. Eine maximale Erstreckung der Stützfläche 60a entspricht der maximalen Erstreckung der Ambossstützfläche 34a. Es ist jedoch auch denkbar, dass die maximale Erstreckung der Ambossstützfläche 34a kleiner oder größer ist als die maximale Erstreckung der Stützfläche 60a des Stützelements 26a. Die Schweißvorrichtung 10a umfasst zumindest eine Stanzeinheit 36a, die zumindest dazu vorgesehen ist, eine zusammenhängende Bahn von Auslasselementen 12a zu durchtrennen. Die Stanzeinheit 36a umfasst zumindest ein weiteres Stanzwerkzeug 68a, welches an dem Halteelement 20a oder an dem Amboss 16a angeordnet ist. Das weitere Stanzwerkzeug 68a ist dazu vorgesehen, die zusammenhängende Bahn von Auslasselementen 12a, vorzugsweise in einzelne Auslasselemente 12a, zu teilen. Das weitere Stanzwerkzeug 68a ist an dem an dem Halteelement 20a oder alternativ an dem Amboss 16a befestigt. Das weitere Stanzwerkzeug 68a ist dazu vorgesehen, die zusammenhängende Bahn von Auslasselementen 12a mittels einer Relativbewegung des Ambosses 16a zu dem Halteelement 20a bzw. zu dem weiteren Stanzwerkzeug 68a zu durchtrennen. Eine Kante des Ambosses 16a bzw. des Halteelements 20a bildet eine Stanzkante für das weitere Stanzwerkzeug 68a. Das weitere Stanzwerkzeug 68a ist als Stanzmesser oder Stanzkante ausgebildet. Es ist jedoch denkbar, dass das weitere Stanzwerkzeug 68a als ein anderes, dem Fachmann bekanntes Stanzwerkzeug ausgebildet ist.

Figur 3 zeigt schematisch einen Ablauf eines Verfahrens zum Schweißen des Auslasselements 12a an das Verpackungsmaterial 14a mittels der Schweißvorrichtung 10a. Das zumindest einfach gefaltete Verpackungsmaterial 14a wird vor dem Schweißvorgang um den Öffnungswinkel aufgefaltet. In zumindest einem Verfahrensschritt 38a wird das um den Öffnungswinkel aufgefaltete Verpackungsmaterial 14a in die Schweißvorrichtung 10a geführt und/oder in der Schweißvorrichtung 10a geführt. In dem zumindest einem Verfahrensschritt 38a wird das Auslasselement 12a in dem Aufnahmebereich 18a des Ambosses 16a angeordnet. Das Auslasselement 12a wird entlang des Führungselements 56a in der Zuführungsrichtung bewegt, bis sich das Auslasselement 12a in dem Aufnahmebereich 18a des Ambosses 16a befindet.

In dem zumindest einen Verfahrensschritt 38a wird das Verpackungsmaterial 14a zwischen dem Amboss 16a der Schweißvorrichtung 10a und der Stützeinheit 24a der Schweißvorrichtung 10a angeordnet. Das Verpackungsmaterial 14a wird zwischen dem Amboss 16a und der Stützeinheit 24a, insbesondere dem Stützelement 26a der Stützeinheit 24a, vor und/oder nach dem Schweißvorgang bewegt. Das Verpackungsmaterial 14a wird in dem zumindest einen Verfahrensschritt 38a zwischen dem Amboss 16a und dem Schweißstempel 22a angeordnet. Das Verpackungsmaterial 14a wird zwischen dem Amboss 16a und dem Schweißstempel 22a vor und/oder nach dem Schweißvorgang bewegt. Das Verpackungsmaterial 14a weist eine Verpackungsmaterialbewegungsachse auf, entlang derer das Verpackungsmaterial 14a zumindest vor und/oder nach dem Schweißvorgang bewegt wird. Die Verpackungsmaterialbewegungsachse ist durch die Materialführungsachse 80a vorgegeben und verläuft zumindest im Wesentlichen senkrecht zu der Bewegungsachse 72a des Stützelements 26a, zu der Ambossbewegungsachse 76a und/oder zu der Zuführungsrichtung der Auslasselementzuführungseinheit 54a.

In zumindest einem Verfahrensschritt 40a werden der Amboss 16a und das Stützelement 26a der Stützeinheit 24a relativ zueinander bewegt. Das Stützelement 26a wird in dem zumindest einen Verfahrensschritt 40a entlang der Bewegungsachse des Stützelements 26a bewegt. Das Stützelement 26a wird in eine Richtung des Ambosses 16a bewegt, zumindest um eine Wirkverbindung des Stützelements 26a mit dem Amboss 16a herzustellen. Der Amboss 16a wird mittels der Stützeinheit 24a, insbesondere mittels des Stützelements 26a der Stützeinheit 24a, vor dem Schweißvorgang in die Schweißposition bewegt.

In zumindest einem Verfahrensschritt 44a wird eine zusammenhängende Bahn von Auslasselementen 12a durch ein Zusammenwirken des Stützelements 26a mit dem Amboss 16a durchtrennt. Die zusammenhängende Bahn von Auslasselementen 12a wird durch eine Relativbewegung des Ambosses 16a zu dem Halteelement 20a bzw. zu dem weiteren Stanzwerkzeug 68a durchtrennt. Die zusammenhängende Bahn von Auslasselementen 12a wird derart durchtrennt, dass zumindest ein einzelnes Auslasselement 12a separat zu der zusammenhängenden Bahn von Auslasselementen 12a vorliegt, wobei das einzelne Auslasselement 12a in dem Aufnahmebereich 18a des Ambosses 16a angeordnet ist. Die zusammenhängende Bahn von Auslasselementen 12a wird mittels der Auslasselementzuführungseinheit 54a bewegt. Die zusammenhängende Bahn von Auslasselementen 12a wird entlang des Führungselements 56a der Auslasselementzuführungseinheit 54a bewegt, insbesondere entlang der Zuführungsrichtung.

In zumindest einem Verfahrensschritt 42a wird das Auslasselement 12a an das Verpackungsmaterial 14a geschweißt, wobei der Amboss 16a mittels des Stützelements 26a abgestützt wird und das Verpackungsmaterial 14a zwischen dem Stützelement 26a und dem Amboss 16a angeordnet ist. Das Auslasselement 12a wird in einem Ultraschallschweißverfahren an das Verpackungsmaterial 14a geschweißt. Es ist alternativ auch denkbar, dass das Auslasselement 12a in einem Zirkularschweißverfahren, einem Wärmekontaktschweißverfahren, insbesondere mit einem Heizstempel, einem Induktionsschweißverfahren, einem Impulsschweißverfahren, einem Laserdurchstrahlschweißverfahren oder dergleichen an das Verpackungsmaterial 14a geschweißt wird. Zumindest während des Schweißvorgangs wird der Amboss 16a mittels des Stützelements 26a abgestützt. Der Amboss 16a wird zumindest während des Schweißvorgangs von der Stützeinheit 24a in der Schweißposition gehalten. Die relative Anordnung des Ambosses 16a zu dem Schweißstempel 22a während des Schweißvorgangs wird mittels der Stützeinheit 24a, insbesondere mittels des Stützelements 26a, dem Abschmelzen der Siegelfläche des Auslasselements 12a angepasst. Zumindest während des Schweißvorgangs wird das Verpackungsmaterial 14a zwischen dem Amboss 16a und dem Stützelement 26a eingeklemmt, insbesondere zwischen der Stützfläche 60a des Stützelements 26a und der Ambossstützfläche 34a des Ambosses 16a.

Das Stützelement 26a wird, zumindest nach dem Schweißvorgang, in eine dem Amboss 16a entgegengesetzte Richtung entlang der Bewegungsachse 72a des Stützelements 26a bewegt, um einen Abstand zwischen dem Amboss 16a und dem Stützelement 26a herzustellen, zumindest um eine Bewegung des Verpackungsmaterials 14a zwischen dem Amboss 16a und dem Stützelement 26a zu ermöglichen. In zumindest einem Verfahrensschritt 48a wird der Amboss 16a in die Auslasselementzuführungsposition bewegt. Der Amboss 16a wird nach dem Schweißvorgang in die Auslasselementzuführungsposition bewegt, insbesondere mittels der Bewegungseinheit 58a. Der Amboss 16a wird automatisch in eine Richtung der Auslasselementzuführungsposition bewegt, solange das Stützelement 26a beabstandet zu dem Amboss 16a angeordnet ist.

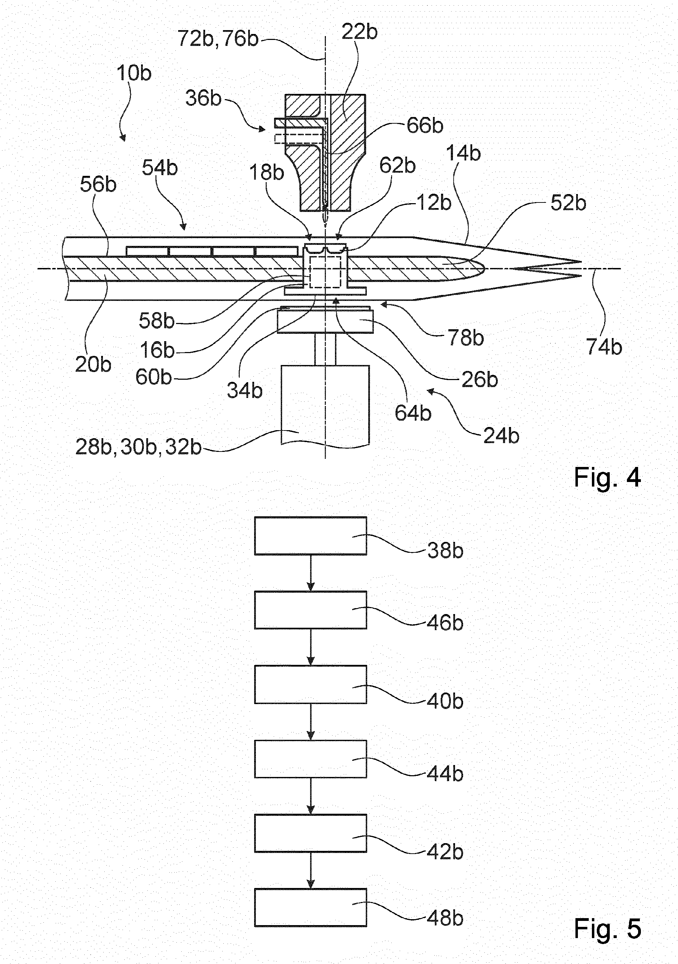

In den Figuren 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figuren 4 und 5 ist der Buchstabe a durch den Buchstaben b ersetzt.

Figur 4 zeigt eine Schweißvorrichtung 10b zum Schweißen eines Auslasselements 12b an ein Verpackungsmaterial 14b. Die Schweißvorrichtung 10b umfasst zumindest einen Amboss 16b. Der Amboss 16b weist zumindest einen Aufnahmebereich 18b zur Aufnahme des zu schweißenden Auslasselements 12b auf. Die Schweißvorrichtung 10b umfasst zumindest eine Auslasselementzuführungseinheit 54b, die zumindest dazu eingerichtet ist, dem Aufnahmebereich 18b des Ambosses 16b zumindest das Auslasselement 12b zuzuführen. Die Auslasselementzuführungseinheit 54b weist zumindest ein Führungselement 56b auf, wobei das Auslasselement 12b dazu vorgesehen ist, bei einer Zuführung in den Aufnahmebereich 18b des Ambosses 16b entlang des Führungselements 56b geführt zu werden. Eine Vielzahl von Auslasselementen 12b liegt auf dem Führungselement 56b auf. Die Auslasselemente 12b der Vielzahl von Auslasselementen 12b sind zueinander lose in einer Reihe hintereinander auf dem Führungselement 56b angeordnet. Mittels einer Relativbewegung des Ambosses 16b zu dem Halteelement 20b ist jeweils das vorderste Auslasselement 12b der Vielzahl von Auslasselementen 12b, insbesondere relativ zu den weiteren Auslasselementen 12b der Vielzahl von Auslasselementen 12b, anhebbar bzw. vereinzelbar. Eine Bewegung der weiteren Auslasselemente 12b zumindest in Richtung des Aufnahmebereichs 18b des Ambosses 16b ist durch eine Seitenwand des Ambosses 16b blockiert, insbesondere wenn sich der Amboss 16b nicht in einer Auslasselementzuführungsposition befindet.

Weiter umfasst die Schweißvorrichtung 10b zumindest ein, insbesondere freitragendes, Halteelement 20b, an dem der Amboss 16b angeordnet ist und zumindest einen Schweißstempel 22b, der zu einem Schweißen des Auslasselements 12b an das Verpackungsmaterial 14b dazu eingerichtet ist, mit dem Amboss 16b zusammenzuwirken. Die Schweißvorrichtung 10b umfasst zumindest eine Stützeinheit 24b zum Stützen des Ambosses 16b, wobei die Stützeinheit 24b zumindest ein beweglich gelagertes Stützelement 26b umfasst. Das Stützelement 26b ist dazu eingerichtet, in einem Schweißbetriebszustand des Schweißstempels 22b eine Haltekraft auf den Amboss 16b auszuüben.

Die Schweißvorrichtung 10b umfasst zumindest eine Stanzeinheit 36b, die zumindest dazu vorgesehen ist, eine Perforation in das Verpackungsmaterial 14b einzubringen. Die Stanzeinheit 36b ist zumindest teilweise an dem Schweißstempel 22b angeordnet. Die Stanzeinheit 36b ist zumindest teilweise innerhalb des Schweißstempels 22b angeordnet. Der Schweißstempel 22b weist zumindest eine Ausnehmung auf, in der die Stanzeinheit 36b zumindest teilweise anordenbar ist. Es ist alternativ auch denkbar, dass die Stanzeinheit 36b zumindest teilweise an einer Außenseite des Schweißstempels 22b angeordnet ist. Die Stanzeinheit 36b umfasst zumindest ein Stanzwerkzeug 66b. Das Stanzwerkzeug 66b ist als Lochstanzwerkzeug ausgebildet. Es ist jedoch auch denkbar, dass das Stanzwerkzeug 66b als ein anderes, dem Fachmann bekanntes Stanzwerkzeug ausgebildet ist. Das Stanzwerkzeug 66b ist beweglich an dem Schweißstempel 22b gelagert. Eine Stanzwerkzeugbewegungsachse des Stanzwerkzeugs 66b verläuft parallel zu einer Bewegungsachse 72b des Stützelements 26b und/oder zu einer Ambossbewegungsachse 76b des Ambosses 16b. Die Stanzeinheit 36b ist dazu eingerichtet, mittels des Stanzwerkzeugs 66b die Perforation in das Verpackungsmaterial 14b einzubringen. Zum Einbringen der Perforation in das Verpackungsmaterial 14b ist die Stanzeinheit 36b dazu eingerichtet, das Stanzwerkzeug 66b relativ zu dem Verpackungsmaterial 14b zu bewegen, insbesondere in eine Richtung des Verpackungsmaterials 14a zu bewegen.

Figur 5 zeigt einen schematischen Ablauf eines Verfahrens zum Schweißen des Auslasselements 12b an das Verpackungsmaterial 14b mittels der Schweißvorrichtung 10b. In zumindest einem Verfahrensschritt 46b wird eine Perforation in das Verpackungsmaterial 14b eingebracht. Zumindest in dem einen Verfahrensschritt 46b wird das Stanzwerkzeug 66b der Stanzeinheit 36b relativ zu dem Schweißstempel 22b bewegt. Das Stanzwerkzeug 66b wird zumindest in dem einen Verfahrensschritt 46b in eine Richtung des Ambosses 16b und/oder des Verpackungsmaterials 14b bewegt, um die Perforation in das Verpackungsmaterial 14b einzubringen. Die Perforation wird in einem durch das Stützelement 26b ungestützten Zustand des Ambosses 16b in das Verpackungsmaterial 14b eingebracht.

## Patentansprüche

1. Schweißvorrichtung (10a; 10b) zum Schweißen eines Auslasselements (12a; 12b), insbesondere eines Ventils, an ein Verpackungsmaterial (14a; 14b), mit zumindest einem Amboss (16a; 16b), der zumindest einen Aufnahmebereich (18a; 18b) zur Aufnahme des zu schweißenden Auslasselements (12a; 12b) umfasst, mit einem, insbesondere freitragenden, Halteelement (20a; 20b), an dem der Amboss (16a; 16b) angeordnet ist, und mit zumindest einem Schweißstempel (22a; 22b), insbesondere einer Sonotrode, der zu einem Schweißen des Auslasselements (12a; 12b) an das Verpackungsmaterial (14a;14b) dazu eingerichtet ist, mit dem Amboss (16a; 16b) zusammenzuwirken, mit zumindest einer Stützeinheit (24a; 24b) zum Stützen des Ambosses (16a; 16b), die zumindest ein beweglich gelagertes Stützelement (26a; 26b) umfasst, das dazu eingerichtet ist, in einem Schweißbetriebszustand des Schweißstempels (22a; 22b) eine Haltekraft auf den Amboss (16a; 16b) auszuüben, **dadurch gekennzeichnet, dass** das Stützelement (26a; 26b) eine Bewegungsachse (72a; 72b) aufweist, entlang derer und/oder um die das Stützelement (26a; 26b) relativ zu dem Amboss (16a; 16b) beweglich gelagert ist.

2. Schweißvorrichtung (10a; 10b) nach Anspruch 1, **dadurch gekennzeichnet, dass** der Amboss (16a; 16b) beweglich an dem Halteelement (20a; 20b) gelagert ist und mittels des Stützelements (26a; 26b) mit einer Haltekraft in Richtung des Schweißstempels (22a; 22b) beaufschlagbar ist.

3. Schweißvorrichtung (10a; 10b) nach Anspruch 1 oder 2, **dadurch gekennzeichnet, dass** die Stützeinheit (24a; 24b) zumindest einen Hydraulikzylinder (28a; 28b), einen Pneumatikzylinder (30a; 30b) oder einen Servoantrieb (32a; 32b) zu einer Bewegung des Stützelements (26a; 26b) umfasst.

4. Schweißvorrichtung (10a; 10b) nach einem der vorhergehenden Ansprüche, **dadurch gekennzeichnet, dass** die Stützeinheit (24a; 24b) derart relativ zum Halteelement (20a; 20b) angeordnet ist, dass das Verpackungsmaterial (14a; 14b) zwischen dem Stützelement (26a; 26b) und dem Halteelement (20a; 20b) anordenbar ist.

5. Schweißvorrichtung (10a; 10b) nach einem der vorhergehenden Ansprüche, **dadurch gekennzeichnet, dass** der Amboss (16a; 16b) eine Ambossstützfläche (34a; 34b) aufweist, die zumindest dazu eingerichtet ist, zum Stützen des Ambosses (16a; 16b) mit dem Stützelement (26a; 26b) zusammenzuwirken, wobei eine maximale Erstreckung der Ambossstützfläche (34a; 34b) größer ist als eine maximale Erstreckung des Aufnahmebereichs (18a; 18b) des Ambosses (16a; 16b).

6. Schweißvorrichtung (10a; 10b) nach einem der vorhergehenden Ansprüche, **gekennzeichnet durch** zumindest eine Stanzeinheit (36b), die zumindest dazu vorgesehen ist, eine Perforation in das Verpackungsmaterial (14b) einzubringen, wobei die Stanzeinheit (36b) zumindest teilweise an dem Schweißstempel (22b) angeordnet ist.

7. Verfahren zum Schweißen eines Auslasselements (12a; 12b) an ein Verpackungsmaterial (14a; 14b) mittels einer Schweißvorrichtung (10a; 10b) nach einem der vorhergehenden Ansprüche, **dadurch gekennzeichnet, dass** in zumindest einem Verfahrensschritt (40a; 40b) der Amboss (16a; 16b) und das Stützelement (26a; 26b) der Stützeinheit (24a; 24b) relativ zueinander bewegt werden.

8. Verfahren nach Anspruch 7, **dadurch gekennzeichnet, dass** in zumindest einem Verfahrensschritt (38a; 38b) das Verpackungsmaterial (14a; 14b) zwischen dem Amboss (16a; 16b) der Schweißvorrichtung (10a; 10b) und der Stützeinheit (24a; 24b) der Schweißvorrichtung (10a; 10b) angeordnet wird.

9. Verfahren nach Anspruch 7 oder 8, **dadurch gekennzeichnet, dass** in zumindest einem Verfahrensschritt (42a; 42b) das Auslasselement (12a; 12b) an das Verpackungsmaterial (14a; 14b) geschweißt wird, wobei der Amboss (16a; 16b) mittels des Stützelements (26a; 26b) abgestützt wird und das Verpackungsmaterial (14a; 14b) zwischen dem Stützelement (26a; 26b) und dem Amboss (16a; 16b) angeordnet ist.

10. Verfahren nach einem der Ansprüche 7 bis 9, **dadurch gekennzeichnet, dass** in zumindest einem Verfahrensschritt (44a) eine zusammenhängende Bahn von Auslasselementen (12a) durch ein Zusammenwirken des Stützelements (26a) mit dem Amboss (16a) durchtrennt wird, wobei ein Stanzwerkzeug (68a) einer Stanzeinheit (36a) der Schweißvorrichtung (10a) die zusammenhängende Bahn von Auslasselementen (12a) teilt.

11. Verfahren nach einem der Ansprüche 7 bis 10, **dadurch gekennzeichnet, dass** in zumindest einem Verfahrensschritt (46b) eine Perforation in das Verpackungsmaterial (14b) eingebracht wird.

12. Verfahren nach einem der Ansprüche 7 bis 10, **dadurch gekennzeichnet, dass** der Amboss (16a; 16b) in zumindest einem Verfahrensschritt (48a; 48b) in eine Auslasselementzuführungsposition bewegt wird.

13. Verpackungsmaschine (50a; 50b) zum Herstellen von Verpackungen aus einem Verpackungsmaterial (14a; 14b) mit einem Auslasselement (12a; 12b) mit einer Schweißvorrichtung (10a; 10b) nach einem der Ansprüche 1 bis 6.

## Claims

1. Welding device (1 0a; 10b) for welding an outlet element (12a; 12b), in particular a valve, to a packaging material (14a; 14b),
with at least one anvil (16a; 16b) comprising at least one receiving region (18a; 18b) for receiving the outlet element (12a; 12b) that is to be welded,
with an, in particular self-supporting, holding element (20a; 20b) which the anvil (16a; 16b) is arranged on, and
with at least one welding die (22a; 22b), in particular a sonotrode, which is configured to interact with the anvil (16a; 16b) for a welding of the outlet element (12a; 12b) to the packaging material (14a; 14b),
with at least one support unit (24a; 24b) for supporting the anvil (16a; 16b), comprising at least one movably supported support element (26a; 26b) which is configured to exert a holding force onto the anvil (16a; 16b) in a welding operation state of the welding die (22a; 22b),
**characterised in that** the support element (26a; 26b) comprises a movement axis (72a; 72b), along which and/or around which the support element (26a; 26b) is supported movably relative to the anvil (16a; 16b).

2. Welding device (10a; 10b) according to claim 1,
**characterised in that** the anvil (16a; 16b) is supported movably on the holding element (20a; 20b) and can be subjected to a holding force toward the welding die (22a; 22b) by means of the support element (26a; 26b).

3. Welding device (10a; 10b) according to claim 1 or 2,
**characterised in that** the support unit (24a; 24b) comprises at least one hydraulic cylinder (28a; 28b), a pneumatic cylinder (30a; 40b) or a servo drive (32a; 32b) for a movement of the support element (26a; 26b).

4. Welding device (10a; 10b) according to one of the preceding claims,
**characterised in that** the support unit (24a; 24b) is arranged relative to the holding element (20a; 20b) in such a way that he packaging material (14a; 14b) is arrangeable between the support element (26a; 26b) and the holding element (20a; 20b).

5. Welding device (10a; 10b) according to one of the preceding claims,
**characterised in that** the anvil (16a; 16b) comprises an anvil support surface (34a; 34b), which is at least configured to interact with the support element (26a; 26b) for a support of the anvil (16a; 16b),
wherein a maximum extent of the anvil support surface (34a; 34b) is larger than a maximum extent of the receiving region (18a; 18b) of the anvil (16a; 16b).

6. Welding device (10a; 10b) according to one of the preceding claims,
**characterised by** at least one punching unit (36b), which is at least configured for introducing a perforation into the packaging material (14b), wherein the punching unit (36b) is arranged at least partly on the welding die (22b).

7. Method for welding an outlet element (12a; 12b) to a packaging material (14a; 14b) by means of a welding device (10a; 10b) according to one of the preceding claims,
**characterised in that** in at least one method step (40a; 40b) the anvil (16a; 16b) and the support element (26a; 26b) of the support unit (24a; 24b) are moved relative to one another.

8. Method according to claim 7,
**characterised in that** in at least one method step (38a; 38b) the packaging material (14a; 14b) is arranged between the anvil (16a; 16b) of the welding device (10a; 10b) and the support unit (24a; 24b) of the welding device (10a; 10b).

9. Method according to claim 7 or 8,
**characterised in that** in at least one method step (42a; 42b) the outlet element (12a; 12b) is welded to the packaging material (14a; 14b),
wherein the anvil (16a; 16b) is supported by the support element (26a; 26b) and the packaging material (14a; 14b) is arranged between the support element (26a; 26b) and the anvil (16a; 16b).

10. Method according to one of claims 7 to 9,
**characterised in that** in at least one method step (44a) a contiguous train of outlet elements (12a) is severed by an interaction of the support element (26a) with the anvil (16a),
wherein a punching tool (68a) of a punching unit (36a) of the welding device (10a) severs the contiguous train of outlet elements (12a).

11. Method according to one of claims 7 to 10,
**characterised in that** in at least one method step (46b) a perforation is introduced into the packaging material (14b).

12. Method according to one of claims 7 to 10,
**characterised in that** in at least one method step (48a; 48b) the anvil (16a; 16b) is moved into an outlet element feeding position.

13. Packaging machine (50a; 50b) for a production of packagings from a packaging material (14a; 14b) with an outlet element (12a; 12b), comprising a welding device (10a; 10b) according to one of claims 1 to 6.

## Revendications

1. Dispositif de soudage (10a ; 10b) pour le soudage d'un élément de sortie (12a ; 12b), en particulier d'une soupape, à un matériau d'emballage (14a ; 14b), avec au moins une enclume (16a ; 16b) comprenant au moins une zone recevante (18a ; 18b) pour recevoir l'élément de sortie (12a ; 12b) qui est à souder,
avec un élément de retenue (20a ; 20b), en particulier autoportant, sur lequel l'enclume (16a ; 16b) est disposée, et
avec au moins une étampe de soudage (22a ; 22b), en particulier une sonotrode, qui est destinée à coopérer avec l'enclume (16a ; 16b) pour le soudage de l'élément de sortie (12a ; 12b) au matériau d'emballage (14a ; 14b),
avec au moins une unité d'appui (24a ; 24b) pour soutenir l'enclume (16a ; 16b), qui comprend au moins un élément d'appui (26a ; 26b) supporté de façon mobile et conçu, en état de fonctionnement à soudage de l'étampe de soudage (22a ; 22b), pour exercer une force de retenue sur l'enclume (16a ; 16b),
**caractérisé en ce que** l'élément d'appui (26a ; 26b) comprend un axe de mouvement (72a ; 72b) le long duquel et/ou autour duquel l'élément d'appui (26a ; 26b) est supporté de façon mobile par rapport à l'enclume (16a ; 16b).

2. Dispositif de soudage (10a ; 10b) selon la revendication 1,
**caractérisé en ce que** l'enclume (16a ; 16b) est supportée sur l'élément de retenue (20a ; 20b) de façon mobile et peut être soumise à une force retenante vers l'étampe de soudage (22a ; 22b).

3. Dispositif de soudage (10a ; 10b) selon la revendication 1 ou 2,
**caractérisé en ce que** l'unité d'appui (24a ; 24b) comprend au moins un cylindre hydraulique (28a ; 28b), un cylindre pneumatique (30a ; 30b) ou une servocommande (32a ; 32b) pour un mouvement de l'élément d'appui (26a ; 26b).

4. Dispositif de soudage (10a ; 10b) selon l'une des revendications précédentes, **caractérisé en ce que** l'unité d'appui (24a ; 24b) est disposée par rapport à l'élément de retenue (20a ; 20b) de telle manière que le matériau d'emballage (14a ; 14b) peut être disposé entre l'élément d'appui (26a ; 26b) et l'élément de retenue (20a ; 20b).

5. Dispositif de soudage (10a ; 10b) selon l'une des revendications précédentes,
**caractérisé en ce que** l'enclume (16a ; 16b) comprend une surface-enclume d'appui (34a ; 34b) destinée à coopérer avec l'élément d'appui (26a ; 26b) pour soutenir l'enclume (16a ; 16b)
une étendue maximale de la surface-enclume d'appui (34a ; 34b) étant supérieure à une étendue maximale de la zone recevante (18a ; 18b) de l'enclume (16a ; 16b).

6. Dispositif de soudage (10a ; 10b) selon l'une des revendications précédentes, **caractérisé par** au moins une unité de poinçonnage (36b) conçue au moins pour introduire une perforation dans le matériau d'emballage (14b),
où l'unité de poinçonnage (36b) est disposée au moins partiellement sur l'étampe de soudage (22b).

7. Procédé pour le soudage d'un élément de sortie (12a ; 12b) à un matériau d'emballage (14a ; 14b) moyennant un dispositif de soudage (10a ; 10b) selon l'une des revendications précédentes,
**caractérisé en ce que** dans au moins une étape de procédé (40a ; 40b) l'enclume (16a ; 16b) et l'élément d'appui (26a ; 26b) de l'unité d'appui (24a ; 24b) sont mus l'un par rapport à l'autre.

8. Procédé selon la revendication 7,
**caractérisé en ce que** dans au moins une étape de procédé (38a ; 38b) le matériau d'emballage (14a ; 14b) est disposé entre l'enclume (16a ; 16b) du dispositif de soudage (10a ; 10b) et l'unité d'appui (24a ; 24b) du dispositif de soudage (10a ; 10b).

9. Procédé selon la revendication 7 ou 8,
**caractérisé en ce que** dans au moins une étape de procédé (42a ; 42b) l'élément de sortie (12a ; 12b) est soudé au matériau d'emballage (14a ; 14b), où l'enclume (16a ; 16b) est soutenue par l'élément d'appui (26a ; 26b) et le matériau d'emballage (14a ; 14b) est disposé entre l'élément d'appui (26a ; 26b) et l'enclume (16a ; 16b).

10. Procédé selon l'une des revendications 7 à 9,
**caractérisé en ce que** dans au moins une étape de procédé (44a) un panneau contigu d'éléments de sortie (12a) est sectionné par coopération de l'élément d'appui (26a) avec l'enclume (16a),
un outil de poinçonnage (68a) d'une unité de poinçonnage (36a) du dispositif de soudage (10a) sectionnant le panneau contigu d'éléments de sortie (12a).

11. Procédé selon l'une des revendications 7 à 10,
**caractérisé en ce que** dans au moins une étape de procédé (46b) une perforation est introduite dans le matériau d'emballage (14b).

12. Procédé selon l'une des revendications 7 à 10,
**caractérisé en ce que** l'enclume (16a ; 16b) est mue dans une position d'alimentation d'élément de sortie dans au moins une étape de procédé (48a ; 48b).

13. Machine à emballage (50a ; 50b) pour fabriquer des emballages à partir d'un matériau d'emballage (14a ; 14b) avec un élément de sortie (12a ; 12b), comprenant un dispositif de soudage (10a ; 10b) selon l'une des revendications 1 à 6.
